# EUROPÄISCHE PATENTANMELDUNG

(11) **EP 4 105 272 A1**
(43) Veröffentlichungstag der Anmeldung: **21.12.2022**
(21) Anmeldenummer: 21179453.2
(22) Anmeldetag: 15.06.2021
(51) Int. Cl.: C08K 5/00, C08K 5/12

(54) **WEICHMACHERZUSAMMENSETZUNG UMFASSEND TRIPENTYLESTER DER 1,2,4-CYCLOHEXANTRICARBONSÄURE**

(71) Anmelder: Evonik Operations GmbH, 45128 Essen (DE)
(72) Erfinder: GRASS, Michael, 45721 Haltern am See (DE); BOECK, Florian, 58455 Witten (DE); WOLDT, Benjamin, 46354 Südlohn (DE)
(74) Vertreter: Evonik Patent Association

(57) **Zusammenfassung**

Die vorliegende Erfindung betrifft eine Weichmacherzusammensetzung, die eine Verbindung gemäß der folgenden Formel (I) 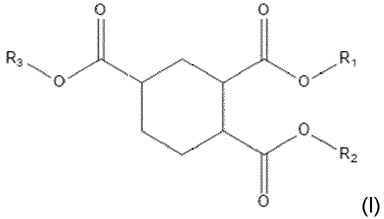 wobei die Reste R₁, R₂ und R₃ jeweils unabhängig voneinander aus der Gruppe, bestehend aus n-Pentyl, 2-Methylbutyl und 3-Methylbutyl, ausgewählt werden. Ein weiterer Gegenstand der vorliegenden Erfindung ist die Verwendung der Weichmacherzusammensetzung als Weichmacher für Polymere und eine Kunststoffzusammensetzung, die die Weichmacherzusammensetzung enthält.

## Beschreibung

Gegenstand der Erfindung ist eine Weichmacherzusammensetzung, die eine Verbindung gemäß der folgenden Formel (I) enthält, 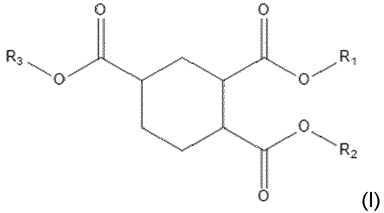 wobei die Reste R₁, R₂ und R₃ jeweils unabhängig voneinander aus der Gruppe, bestehend aus n-Pentyl, 2-Methylbutyl und 3-Methylbutyl, ausgewählt werden. Ein weiterer Gegenstand der vorliegenden Erfindung ist die Verwendung der Weichmacherzusammensetzung als Weichmacher für Polymere und eine Kunststoffzusammensetzung, die die Weichmacherzusammensetzung enthält.

Kunststoffe bzw. Polymere sind aus den meisten Anwendungen nicht mehr wegzudenken. Polyvinylchlorid (PVC) gehört dabei zu den wirtschaftlich bedeutendsten Kunststoffen und wird sowohl in Form von Hart-PVC als auch in Form von Weich-PVC eingesetzt. Da viele Kunststoffe bzw. Polymere in vielen Fällen zu spröde oder schlecht verarbeitbar sind, werden den Kunststoffen in vielen Anwendungsgebieten Weichmacher oder Weichmacherzusammensetzungen zugesetzt, um ihre Eigenschaften entsprechend anzupassen.

Bei der Herstellung von PVC-basierten Produkten, beispielsweise Bodenbelägen, Spielzeugen o. ä., werden dem PVC zur Verbesserung der Verarbeitbarkeit sowie zur Anpassung weiterer anwendungsrelevanter Eigenschaften Weichmacher zugesetzt. Aufgrund ihrer vorteilhaften Eigenschaften gehören zu den wichtigsten Weichmachern für PVC und Vinylchlorid-haltigen Copolymeren noch immer Verbindungen aus der Gruppe der Phthalate, insbesondere Diethylhexylphthalat (DEHP), Diisononylphthalat (DINP) und Diisodecylphthalat (DIDP). Auf Grund von Diskussionen über eventuelle toxikologische Effekte dieser Stoffklasse, wird seit vielen Jahren nach Alternativen für Phthalat-basierte Weichmacher gesucht.

Im Stand der Technik wurde bereits eine Vielzahl von möglichen Alternativen beschrieben, beispielsweise 1,2- oder 1,4-Cyclohexandicarbonsäurediester, die über Kernhydrierung aus Phthalaten oder Terephthalaten hergestellt werden können. Auch andere Weichmacher sind bekannt und in der einschlägigen Literatur beschrieben.

Die zugrundeliegende Aufgabe der vorliegenden Erfindung war die Bereitstellung von Weichmachern, die als Ersatz von Phthalat-basierten Weichmachen eingesetzt werden können. Diese Weichmacher sollten eine Verarbeitbarkeit mit Polymeren, insbesondere mit PVC und Vinylchlorid-haltigen Copolymeren aufweisen, die zumindest auf dem Niveau von DINP liegt, vorzugsweise noch besser ist. Insbesondere sollten diese neuartigen Weichmacher eine geringe Migrationsneigung aus weichgemachtem PVC oder weichgemachten Vinylchlorid-haltigen Copolymeren in andere Materialien aufweisen.

Die zugrundeliegende Aufgabe konnte durch die in Anspruch 1 dargestellten Weichmacher gelöst werden. Bevorzugte Ausführungsformen sind in den Unteransprüchen angegeben.

Gegenstand der vorliegenden Erfindung ist eine Weichmacherzusammensetzung, umfassend mindestens eine Verbindung gemäß der folgenden Formel (I) 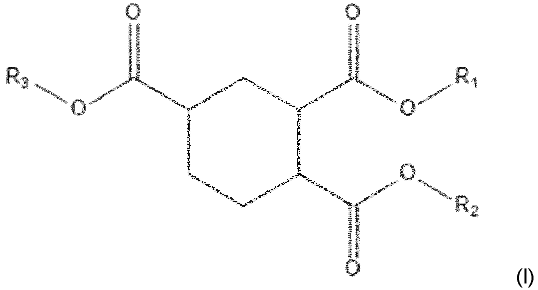 wobei die Reste R₁, R₂ und R₃ jeweils unabhängig voneinander aus der Gruppe, bestehend aus n-Pentyl, 2-Methylbutyl und 3-Methylbutyl, ausgewählt werden. Die Reste R₁, R₂ und R₃ sind somit unabhängig voneinander einer von drei möglichen isomeren C5-Alkylresten.

In einer besonders bevorzugten Ausführungsform der vorliegenden Erfindung sind die Reste R₁, R₂ und R₃ identisch. Das bedeutet, dass die Reste R₁, R₂ und R₃ alle dem gleichen Alkylrest entsprechen, also entweder R₁ = R₂ = R_{3 =} n-Pentyl oder R₁ = R₂ = R_{3 =} 2-Methylbutyl oder R₁ = R₂ = R₃ = 3-Methylbutyl ist. Die sich daraus ergebenden Verbindungen sind in den nachfolgenden Verbindungen (II), (III) und (IV) gezeigt. Verbindung (II) betrifft dabei die Verbindung mit R₁ = R₂ = R_{3 =} n-Pentyl, Verbindung (III) betrifft die Verbindung mit R₁ = R₂ = R_{3 =} 2-Methylbutyl und Verbindung (III) betrifft die Verbindung mit R₁ = R₂ = R_{3 =} 3-Methylbutyl. In einer bevorzugten Ausführungsform der vorliegenden Erfindung umfasst die Weichmacherzusammensetzung zumindest eine der Verbindungen (II), (III) oder (IV).

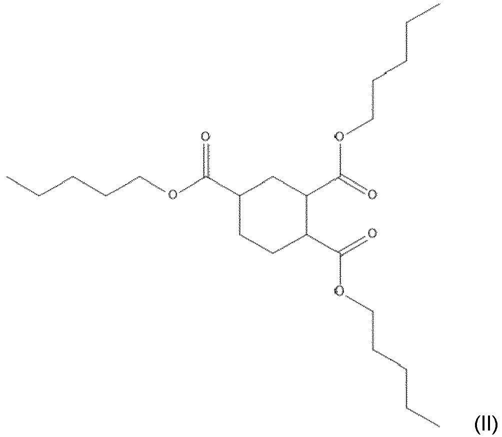

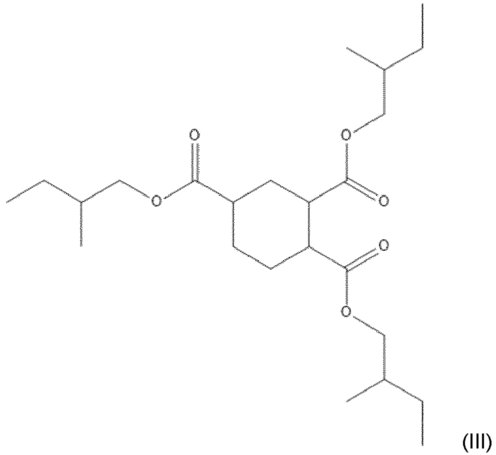

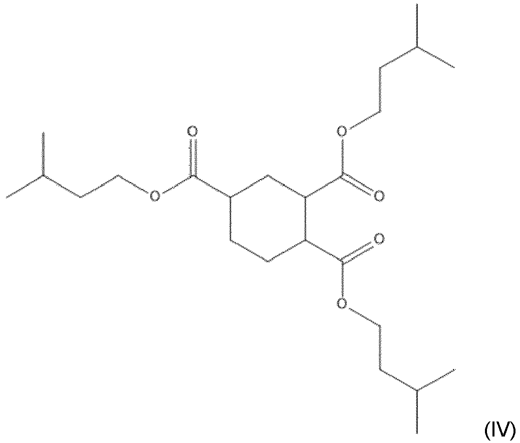

Überraschenderweise wurde gefunden, dass die erfindungsgemäße Weichmacherzusammensetzung verbesserte Eigenschaften aufweist, beispielsweise im Hinblick auf das Gelierverhalten, die Viskosität und die Shore-Härte. Bei Einsatz der Weichmacherzusammensetzung in Plastisolen und Dryblends zeigt sich überraschenderweise eine verbesserte Verarbeitbarkeit im Vergleich zu den nicht kernhydrierten Trimellitaten.

Die erfindungsgemäße Weichmacherzusammensetzung betrifft insbesondere auch Mischungen von Verbindungen gemäß der vorgenannten Formel (I). Bei Mischungen verschiedener Verbindungen, bei denen die Reste R₁, R₂ und R₃ unterschiedliche isomere Alkylreste tragen können und/oder bei denen ein bestimmter Alkylrest auch an einer der unterschiedlichen Positionen R₁, R₂ und R₃ vorhanden sein kann, können demgemäß eine Vielzahl unterschiedlicher Verbindungen gemäß der Formel (I) in der Mischung vorliegen. Aufgrund dessen werden nachfolgend die Mischungen über ihren Anteil an den jeweiligen Alkylresten, der sich auf alle in der Mischung vorhandene Verbindungen gemäß der Formel (I) bezieht, beschrieben. Die Anteile der jeweiligen Alkylreste können über ¹H-NMR bestimmt werden. Es versteht sich dabei, dass die Reste R₁, R₂ und R₃ im Rahmen der vorliegenden Erfindung immer die gleiche Bedeutung aufweisen können, also jeweils unabhängig voneinander aus der Gruppe, bestehend aus n-Pentyl, 2-Methylbutyl und 3-Methylbutyl, ausgewählt werden.

Die erfindungsgemäße Weichmacherzusammensetzung umfasst demzufolge vorzugsweise eine Mischung von Verbindungen gemäß der Formel (I) 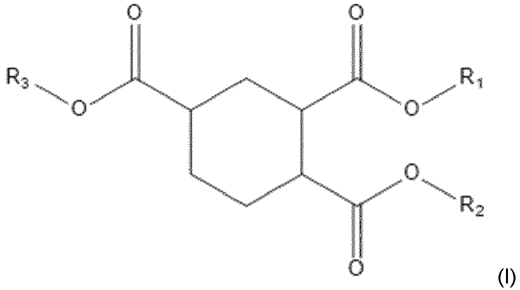 wobei ein Alkylrest aus der Gruppe, bestehend aus n-Pentyl, 2-Methylbutyl und 3-Methylbutyl in einem Anteil von 30 bis 95 Mol% und ein anderer Alkylrest oder die beiden anderen Alkylreste aus der genannten Gruppe in einem Anteil von 5 bis 70 Mol%, jeweils bezogen auf alle Reste R₁, R₂ und R₃ alle der Verbindung gemäß der Formel (I) in der Mischung vorhanden, sind. Damit ist beispielsweise gemeint, dass n-Pentyl in einem Anteil von 30 bis 95 Mol% und 2-Methylbutyl und/oder 3-Methylbutyl in einem Anteil von 5 bis 70 Mol% bezogen auf alle Reste R₁, R₂ und R₃ der Verbindungen der Formel (I) in der Mischung vorliegen.

Auf Basis der oben genannten Anteile von 30 bis 95 Mol-% für einen der drei genannten Alkylreste und 5 bis 70 Mol-% für einen der beiden anderen oder beide anderen Alkylreste können sich beispielsweise die folgenden Anteile für die jeweils möglichen Alkylreste, bezogen auf alle Reste R₁, R₂ und R₃, in der Mischung von Verbindungen gemäß der Formel (I) ergeben:

| n-Pentyl / Mol-% | 2-Methylbutyl / Mo-l% | 3-Methylbutyl / Mol-% |
|---|---|---|
| 50 | 50 | - |
| 50 | | 50 |
| 40 | 30 | 30 |
| 34 | 33 | 33 |
| 47 | 3 | 50 |
| 95 | 5 | 0 |

Erfindungsgemäß besonders bevorzugt ist eine Weichmacherzusammensetzung, die eine Mischung von Verbindungen gemäß der oben genannten Formel (I) umfasst, wobei ein Rest aus der Gruppe, bestehend aus n-Pentyl, 2-Methylbutyl und 3-Methylbutyl in einem Anteil von 40 bis 95 Mol% und ein anderer Rest oder die beiden anderen Reste aus der genannten Gruppe in einem Anteil von 5 bis 60 Mol% jeweils bezogen auf alle Reste R₁, R₂ und R₃ der Verbindung gemäß der Formel (I) in der Mischung vorhanden sind.

Es ist erfindungsgemäß weiterhin bevorzugt, wenn der Anteil von 2-Methylbutylresten begrenzt ist. Eine entsprechend bevorzugte Weichmacherzusammensetzung ist eine Weichmacherzusammensetzung, die eine Mischung von Verbindungen gemäß der oben genannten Formel (I) umfasst, wobei der 2-Methylbutylrest in einem Anteil von maximal 60 Mol%, vorzugsweise in einem Anteil von maximal 40 Mol%, ganz besonders bevorzugt maximal 20 Mol % jeweils bezogen auf alle Reste R₁, R₂ und R₃ der Verbindung gemäß der Formel (I) in der Mischung vorhanden ist.

Die Herstellung der erfindungsgemäßen Verbindungen der vorgenannten Formel (I) kann über verschiedene Verfahren erfolgen. Grundsätzlich möglich wäre eine Veresterung von 1,2,4-Cyclohexantricarbonsäure mit den entsprechenden Alkoholen n-Pentanol, 2-Methylbutanol und 3-Methylbutanol zu den Verbindungen der Formeln (I), (II), (III) und (IV). Sofern Mischungen von Verbindungen gemäß der vorgenannten Formel (I) hergestellt werden sollen, können diese Mischungen durch Veresterung von 1,2,4-Cyclohexantricarbonsäure mit einer entsprechenden Alkoholmischung aus den entsprechenden Alkoholen n-Pentanol, 2-Methylbutanol und 3-Methylbutanol erfolgen. Die Verfahrensbedingungen für eine Veresterung von Cyclohexanpolycarbonsäurederivaten sind dem Fachmann grundsätzlich bekannt.

Ein weiteres mögliches Verfahren zur Herstellung der Verbindungen der vorgenannten Formel (I) ist die Umesterung eines Triesters der 1,2,4-Cyclohexantricarbonsäure. Vorzugsweise wird dabei ein Triester verwendet, dessen jeweilige Alkylreste eine geringere Anzahl an Kohlenstoffatomen aufweisen als die hier vorhandenen C5-Alkylreste n-Pentyl, 2-Methylbutyl und 3-Methylbutyl. Ein Beispiel dafür wäre der Trimethylester der 1,2,4-Cyclohexantricarbonsäure. Zur Herstellung der Verbindungen gemäß den vorgenannten Formeln (II), (III) und (IV) wird dann der Trimethylester der 1,2,4-Cyclohexantricarbonsäure mit dem jeweiligen Alkohol n-Pentanol, 2-Methylbutanol oder 3-Methylbutanol umgeestert. Zur Herstellung einer Mischung von Verbindungen gemäß der vorgenannten Formel (I) kann der Trimethylester von 1,2,4-Cyclohexantricarbonsäure mit einer entsprechenden Alkoholmischung aus den entsprechenden Alkoholen n-Pentanol, 2-Methylbutanol und/oder 3-Methylbutanol umgeestert werden. Die Verfahrensbedingungen für eine Umesterung von Cyclohexanpolycarbonsäureesterderivaten sind dem Fachmann grundsätzlich bekannt.

Ein weiteres mögliches Verfahren zur Herstellung von Verbindungen der vorgenannten Formel (I) ist die Kernhydrierung von entsprechenden Estern der Trimellitsäure. Dabei werden als Edukte Tripentylester der Trimellitsäure eingesetzt, wobei jeder Pentylrest unabhängig voneinander n-Pentyl, 2-Methylbutyl und 3-Methylbutyl sein kann, die der herzustellenden Verbindung gemäß der vorgenannten Formel (I) entsprechen. Zur Herstellung einer Mischung von Verbindungen gemäß der vorgenannten Formel (I) wird dann eine, bezogen auf den Anteil der jeweiligen Alkylreste, entsprechende Mischung aus Tripentylestern der Trimellitsäure eingesetzt. Die Verfahrensbedingungen einer Kernhydrierung sind dem Fachmann grundsätzlich bekannt, beispielsweise aus der EP 1 511 562 A1. Die vorherige Herstellung der Trimellitsäureester kann übrigens durch Veresterung oder Umesterung aus Trimellitsäure bzw. Trimellitsäureanhydrid oder einem Trialkylester der Trimellitsäure erfolgen (s. bspw. EP 3 147 318 A1).

Die erfindungsgemäße Weichmacherzusammensetzung kann neben der mindestens einen Verbindung gemäß der vorgenannten Formel (I) bzw. der Mischung von Verbindungen gemäß der Formel (I) einen weiteren Weichmacher enthalten. Je nach Anwendungszweck können ein oder mehrere zusätzliche, insbesondere von den Verbindungen gemäß der vorgenannten Formel (I) verschiedene, Weichmacher in der Weichmacherzusammensetzung enthalten sein, um die Eigenschaften der resultierenden Weichmacherzusammensetzung gezielt einzustellen. Nach einer besonders bevorzugten Ausführungsform umfasst die Weichmacherzusammensetzung jedoch weniger als 5 Gew.-%, weiterhin bevorzugt weniger als 0,5 Gew.-%, besonders bevorzugt weniger als 0,1 Gew.-% Phthalate.

Der zusätzliche Weichmacher kann grundsätzlich aus der Gruppe, bestehend aus Adipaten, Benzoaten, beispielsweise Monobenzoaten oder Glycoldibenzoaten, chlorierten Kohlenwasserstoffen (sog. Chlorparaffinen), Citraten, Cyclohexandicarboxylaten, epoxidierten Fettsäureestern, epoxidierten Pflanzenölen, epoxidierten acylierten Glyceriden, Furandicarboxylaten, Phosphaten, Succinaten, Sulfonamiden, Sulfonaten, Terephthalaten, Trimellitaten und oligomeren oder polymeren Estern auf Basis von Adipin-, Bernstein- oder Sebacinsäure, ausgewählt werden. In einer bevorzugten Ausführungsform der vorliegenden Erfindung enthält die Weichmacherzusammensetzung einen weiteren Weichmacher, der aus der Gruppe, bestehend aus Alkylbenzoaten, Alkylsulfonsäureestern des Phenols, Dialkyladipaten, Glycerinestern, C4-C6-Säuren von Polyolen, Citronensäuretrialkylestern, acetylierten Citronensäuretrialkylestern, Glykoldibenzoaten, Trialkylestern der Trimellitsäure, Dialkylterephthalaten, Dialkylphthalaten, Estern der Furandicarbonsäure, Dialkanoylestern von Dianhydrohexitolen (z.B. Isosorbid), epoxidierten Fettsäurealkylestern, Polymerweichmachern, beispielsweise der Polyadipate, und Dialkylestern der 1,2-, 1,3- oder 1,4-Cyclohexandicarbonsäure, ausgewählt wird.

In einer weiterhin bevorzugten Ausführungsform wird der weitere Weichmacher, der in der Weichmacherzusammensetzung enthalten ist, aus der Gruppe, bestehend aus C8- bis C13-Alkylbenzoaten, C4- bis C10-Dialkyladipaten, Pentaerythrit-tetravalerat, acetylierten Citronensäuretrialkylestern mit C4 bis C9-Alkylgruppen, C4- bis C10-Trialkyltrimellitaten, C4- bis C9-Dialkylterephthalaten, C4- bis C13-Dialkylphthalaten, insbesondere C9- bis C13-Dialkylphthalaten und C4- bis C10-Dialkylestern der 1,2-, 1,3- oder 1,4-Cyclohexandicarbonsäure, ausgewählt.

Ein bevorzugter Gegenstand der vorliegenden Erfindung ist eine Weichmacherzusammensetzung, die die mindestens eine Verbindung gemäß der vorgenannten Formel (I) oder eine Mischung von Verbindungen gemäß der vorgenannten Formel (I) und Di-ethylhexylterephthalat (DEHT oder DOTP) umfasst. Entsprechende Weichmacherzusammensetzungen zeichnen sich durch eine niedrige Flüchtigkeit aus. Diese Weichmacherzusammensetzungen sind besonders für Innenraumanwendungen vorteilhaft einsetzbar, da Produkte enthaltend entsprechende Weichmacherzusammensetzungen geringe Emissionswerte aufweisen.

Ein weiterer bevorzugter Gegenstand der vorliegenden Erfindung ist eine Weichmacherzusammensetzung, die die mindestens eine Verbindung gemäß der vorgenannten Formel (I) oder eine Mischung von Verbindungen gemäß der vorgenannten Formel (I) und 1,2- oder 1,4-Cyclohexandicarbonsäureester, insbesondere die entsprechenden Diisononyl- oder Di-2-ethylhexylester, umfasst. Produkte, welche diese Weichmacherzusammensetzungen enthalten, zeichnen sich insbesondere dadurch aus, dass sie neben einer niedrigen Flüchtigkeit zusätzlich noch eine verbesserte Kälteflexibilität aufweisen. Zudem sind Plastisole enthaltend entsprechende Weichmacherzusammensetzungen aufgrund einer herabgesetzten Viskosität besser verarbeitbar. Gleichzeitig zeigen sie eine sehr gute UV-Stabilität, so dass sie sowohl im Innen- als auch im Außenbereich vorteilhaft eingesetzt werden können.

Ebenfalls bevorzugt ist eine Weichmacherzusammensetzung, die die mindestens eine Verbindung gemäß der vorgenannten Formel (I) oder eine Mischung von Verbindungen gemäß der vorgenannten Formel (I) und Trialkylester der Trimellitsäure, in denen die Alkylreste 6 und mehr Kohlenstoffatome, vorzugsweise 7, 8, 9, 10 oder 11 Kohlenstoffatome aufweisen, umfasst. Entsprechende Weichmacherzusammensetzungen beziehungsweise die daraus hergestellten Produkte weisen eine besonders geringe Flüchtigkeit auf.

Ein weiterer bevorzugter Gegenstand der vorliegenden Erfindung ist eine Weichmacherzusammensetzung, die die mindestens eine Verbindung gemäß der vorgenannten Formel (I) oder eine Mischung von Verbindungen gemäß der vorgenannten Formel (I) und einen schnell gelierenden Weichmacher ausgewählt aus der Gruppe, bestehend aus Dibutylterephthalat, Di(iso)-pentylterephthalat, Isodecylbenzoat, Isononylbenzoat, Acetyl-tributylcitrat, Tributylcitrat, Dipropylenglycoldibenzoat, Diethylenglycoldibenzoat, Triethylenglycoldibenzoat und Mischungen von zwei oder mehr davon aufweisen. Diese schnell gelierenden Weichmacher sorgen für eine verbesserte Verarbeitbarkeit bei Plastisolanwendungen wie Bodenbelägen, Kunstleder oder Tapeten.

Die erfindungsgemäßen Weichmacherzusammensetzungen umfassend die Verbindungen gemäß der vorgenannten Formel (I) oder Mischungen von Verbindungen gemäß der vorgenannten Formel (I), mit oder ohne weiterem Weichmacher, können als Weichmacher für Kunststoffe bzw. Polymere verwendet werden. Die Verwendung als Weichmacher für Polymere ist ein weiterer Gegenstand der vorliegenden Erfindung.

Geeignete Polymere sind vorzugsweise ausgewählt aus der Gruppe, die gebildet wird durch Polyvinylchlorid (PVC), Homo- oder Copolymere auf Basis von Ethylen, Propylen, Butadien, Vinylacetat, Glycidylacrylat, Glycidylmethacrylat, Ethylacrylat, Butylacrylat oder Methacrylat mit Alkoxyresten von verzweigten oder unverzweigten Alkoholen mit einem bis zehn Kohlenstoffatom(en), Acrylnitril oder cyclischen Olefinen, chlorsulfoniertes Polyethylen, 20 Polyvinylidenchlorid (PVDC), Polyacrylate, insbesondere Polymethylmethacrylat (PMMA), Polyalkylmethacrylat (PAMA), Polyharnstoffe, silylierte Polymere, Fluorpolymere, insbesondere Polyvinylidenfluorid (PVDF), Polytetrafluorethylen (PTFE), Polyvinylacetat (PVAc), Polyvinylalkohol (PVA), Polyvinylacetale, insbesondere Polyvinylbutyral (PVB), Polystyrolpolymere, insbesondere Polystyrol (PS), expandierbares Polystyrol (EPS), 25 Acrylonitril-Styrol-Acrylat (ASA), Styrolacrylonitril (SAN), Acrylonitril-Butadien-Styrol (ABS), Styrol-Maleinsäureanhydrid-Copolymer (SMA), Styrol-Methacrylsäure-Copolymer, Polyolefine, insbesondere Polyethylen (PE) oder Polypropylen (PP), thermoplastische Polyolefine (TPO), Polyethylen-Vinylacetat (EVA), Polycarbonate, Polyethylenterephthalat (PET), Polybutylenterephthalat (PBT), Polyoxymethylen (POM), Polyamid (PA), Polyurethan (PU), Thermoplastisches Polyurethan (TPU), Polysulfide (PSu), Biopolymere, insbesondere Polymilchsäure (PLA), Polyhydroxybutyral (PHB), Polyhydroxyvaleriansäure (PHV), Polyester, Stärke, Cellulose und Cellulosederivate, insbesondere Nitrocellulose (NC), Ethylcellulose (EC), Celluloseacetat (CA), Cellulose-Acetat/Butyrat (CAB), Gummi und Silikone.

Bevorzugt werden die erfindungsgemäßen Weichmacherzusammensetzungen als Weichmacher für PVC oder Vinylchlorid-enthaltende Polymere verwendet.

Ein weiterer Gegenstand der vorliegenden Erfindung ist eine Kunststoffzusammensetzung, welche ein oder mehrere Polymere aus der Gruppe, bestehend aus Polyvinylchlorid (PVC), Co-Polymeren von Vinylchlorid mit Vinylacetat oder mit Butylacrylat, Polyalkylmethacrylat (PAMA), Polyvinylbutyral (PVB), Polyurethan, Polysulfiden, Polymilchsäure (PLA), Polyhydroxybutyral (PHB) und Nitrocellulose, ausgewählt wird und die erfindungsgemäße Weichmacherzusammensetzung, umfassend die Verbindungen gemäß der vorgenannten Formel (I) oder Mischungen von Verbindungen gemäß der vorgenannten Formel (I), mit oder ohne weiterem Weichmacher, enthält. Als Polymer in der Kunststoffzusammensetzung ist PVC bevorzugt. Bevorzugt ist das PVC ein Suspensions-, Masse-, Mikrosuspensions- oder Emulsions-PVC. Hinsichtlich der Massenanteile der einzelnen Komponenten ist es erfindungsgemäß bevorzugt, dass die Kunststoffzusammensetzung auf 100 Massenteile Polymer von 5 bis 200, bevorzugt von 10 bis 150 Massenteilen, der erfindungsgemäßen Weichmacherzusammensetzung enthält.

Es kann außerdem vorteilhaft sein, wenn die erfindungsgemäßen Kunststoffzusammensetzungen neben dem einen oder den mehreren Polymeren und der erfindungsgemäßen Weichmacherzusammensetzung ein oder mehrere Additive aus der Gruppe der Thermostabilisatoren, Füllstoffe, Pigmente, Treibmittel, Biozide, UV- und Licht-Stabilisatoren, Co-Stabilisatoren, Antioxidantien, Viskositätsregler, Entlüfter, Haftvermittler, Gleitmittel und Färbemittel. Bevorzugt enthalten die erfindungsgemäßen Kunststoffzusammensetzungen Thermostabilisatoren und optional Füllstoffe sowie Pigmente.

Die erfindungsgemäßen Kunststoffzusammensetzungen können in Klebstoffen, Dichtungsmassen, Beschichtungsmassen, Lacken, Farben, Plastisolen, Schäumen, Kunstleder, Fußbodenbelägen (z.B. Deck- oder Schaumschicht), Dachbahnen, Unterbodenschutzmassen, Gewebebeschichtungen, Kabeln, Drahtisolierungen, Schläuchen, Extrusionsartikeln, Folien, im Automobilinnenbereich, in Tapeten, Tinten, Spielzeug, Kontaktfolien, Lebensmittelverpackungen oder medizinischen Artikeln, beispielsweise Schläuchen oder Blutbeuteln, eingesetzt werden.

Die vorliegende Erfindung wird nachfolgend anhand von Beispielen beschrieben. Diese Beispiele dienen der Veranschaulichung und sind nicht einschränkend zu verstehen.

### Beispiel 1: Herstellung der erfindungsgemäßen Weichmacher

In eine Glasapparatur umfassend Rührkolben mit Rührer, Probenahmestutzen, Tropftrichter sowie Wasserauskreiser mit aufgesetztem Intensivkühler und Thermometer wurden 432 g 1,2,4-Cyclohexantricarbonsäure (2,0 Mol; Firma Suzhou Rovathin Foreign Trade Co. Ltd., Reinheit (NMR) > 99,9%) mit zunächst 3,75 mol C5-Alkohol oder C5-Alkoholgemisch eingefüllt. Die Apparatur wurde mindestens eine Stunde mit Stickstoff (6 l/h) über den Probenahmestutzen gespült. Anschließend wurden 0,51g Tetra-n-Butyltitanat (0,0015 mol) hinzugegeben.

Die Reaktionsmischung wurde langsam unter Rühren und kontinuierlichem Stickstoffstrom (6 l/h) bis auf Siedetemperatur aufgeheizt. Ab diesem Zeitpunkt fiel Wasser an, das kontinuierlich über den Wasserauskreiser aus der Reaktion entfernt wurde. Nach Erreichen einer Temperatur von 240°C wurden weitere 3,75 mol des C5-Alkohols bzw. des C5-Alkoholgemisches und 0,51 g Tetra-n-Butyltitanat (0,0015 mol) so über den Tropftrichter und den Probenahmestutzen zudosiert, dass die Reaktionstemperatur nicht unter 240°C fiel. Im Verlauf der Veresterung fielen ca. 108 ml Wasser an (6 mol Reaktionswasser). Nach Erreichen dieser Wassermenge wurde von Zeit zu Zeit die Säurezahl anhand einer Probe aus der Reaktion bestimmt. Die Reaktion wurde nach Erreichen einer Säurezahl von weniger als 0,1 mg KOH pro g Probe beendet und das erhaltene Rohprodukt wie nachfolgend beschrieben aufgearbeitet.

Das Rohprodukt wurde in einen Rührkolben mit Rührer, Thermometer, Tauchrohr, Claisen-Brücke und Vorlagekolben umgefüllt. Die Apparatur wurde mindestens eine Stunde mit Stickstoff (6 l/h) über das Tauchrohr gespült. Das Rohprodukt wurde mit 10 mol Wasser pro mol Katalysator und 2 Gew.-% Aktivkohle (bezogen auf die gesamte Produktmenge) versetzt und bei 80°C für 15 Minuten unter Stickstoff gerührt. Anschließend wurde unter maximalem Vakuum (< 5 mbar) langsam aufgeheizt und die Temperatur entsprechend des Destillationsanfalls bis auf 160°C erhöht. Nach vollständiger Destillation des Überschussalkohols wurde das Rohprodukt unter Vakuum und Einleiten von Stickstoff (20mbar) für 3 Stunden gestrippt, um den Alkoholgehalt weiter abzusenken. Danach wurde wieder auf 80 °C abgekühlt und mit 2 Gew.-% basischem Aluminiumoxid (bezogen auf die gesamte Produktmenge) vermischt und für 1 Stunde gerührt. Bei dieser Temperatur wurde anschließend das Produkt über einen Büchnertrichter mit Filterpapier und vorgepresstem Filterkuchen aus Filterhilfsmittel (Perlite Typ D14) mittels Vakuum in eine Saugflasche filtriert. Das Filtrat war das gewünschte Produkt (s. Tabelle 1).

### Eingesetzte Rohstoffe:

**Tabelle 1: eingesetzte Alkohole und die hieraus erhältlichen Produkte**

| Probe | Eingesetzte Alkohole | Reaktionszeit t in Stunden | Reinheit des esters (GC in Flächen-%) | Dynamische Viskosität bei 20 °C in mPa*s |
|---|---|---|---|---|
| A | n-Pentanol / 2-Methylbutanol (1:1) | 9 | 99,3 | 69 |
| B | n-Pentanol | 9 | 99,1 | 46 |
| C | 2-Methylbutanol | 7,5 | 99,2 | 121 |
| D | 3-Methylbutanol | 8 | 99,2 | 76 |

| | | | | |
|---|---|---|---|---|
| 3-Methylbutanol (3-Mb): Firma Sima Aldrich, Reinheit >99% 2-Methylbutanol (2-Mb): Firma Sigma Aldrich, Reinheit > 99% n-Pentanol (n-Pe): Firma Sigma Aldrich, Reinheit > 99% | | | | |

### Beispiel 2: Herstellung und Prüfung an Plastisolen und daraus hergestellten Prüfkörpern

Aus den gemäß Beispiel 1 synthetisierten Weichmachern wurden PVC-Plastisole hergestellt, wie sie beispielsweise zur Fertigung von Deckstrichfilmen (füllstofffreie Schicht) für Fußbodenbeläge verwendet werden. Die Mengen in den Plastisolrezepturen sind jeweils in Massenanteilen (phr) angegeben. Die Rezeptur ist in Tabelle 2 dargestellt.

**Tabelle 2: Mischungsverhältnisse der hergestellten Plastisole**

| **Substanz** | **Beispielnummer** | | | | |
|---|---|---|---|---|---|
| | 1.1 | 1.2 | 1.3 | 1.4 | 1.5 |
| Vestolit B 7021 Ultra | 100 | 100 | 100 | 100 | 100 |
| Vestinol 9 | 50 | | | | |
| A | | 50 | | | |
| B | | | 50 | | |
| C | | | | 50 | |
| D | | | | | 50 |
| Drapex 39 | 3 | 3 | 3 | 3 | 3 |
| Reagens CLX/759/6PF | 2 | 2 | 2 | 2 | 2 |

| | | | | | |
|---|---|---|---|---|---|
| Vestolit B 7021 Ultra: Pasten-PVC von der Fa. Vestolit GmbH Vestinol 9: Diisononylphthalat (DINP) von der Fa. Evonik Operations GmbH Drapex 39: epoxidiertes Sojabohnenöl (ESBO) von der Fa. Galata Chemicals Reagens CLX/759/6PF: Thermostabilisator auf Ca/Zn-Basis von der Fa. Reagens | | | | | |

Zuerst wurden die flüssigen und dann die pulverförmigen Bestandteile in einen Mischbecher eingewogen und mit einem Spatel so verrührt, dass kein unbenetztes Pulver mehr vorhanden war. Der Mischbecher wurde anschließend in einen Dissolverrührer eingespannt. Nach Einschalten des Rührers wurde die Drehzahl langsam auf ca. 2000 UpM (Umdrehungen pro Minute) erhöht. Währenddessen wurde das Plastisol vorsichtig entlüftet. Sobald das Plastisol eine Temperatur von etwa 30°C erreicht hatte, wurde die Drehzahl auf ca. 350 UpM gesenkt. Ab jetzt wurde das Plastisol für 9 Minuten bei dieser Drehzahl und einem Druck unterhalb von 20 mbar entlüftet. Damit wurde sichergestellt, dass es bei der Homogenisierung des Plastisols nicht zu einem vorzeitigen Angelieren kommen konnte.

Die so hergestellten Plastisole wurden auf verschiedene Eigenschaften untersucht. Die Ergebnisse sind in Tabelle 3 dargestellt.

### Bestimmung der Plastisolviskosität

Die Messung der Viskosität der so hergestellten Plastisole wurde mit einem Rheometer Physica MCR 101 (Firma Anton Paar Germany GmbH) mit Hilfe der zugehörigen Software durchgeführt, wobei der Rotationsmodus und das Messsystem CC27 verwendet wurden. Die Messung wurde durchgeführt, nachdem die Plastisole ab ihrer Herstellung für 24 Stunden bei 25 °C temperiert wurden.

Während der Messung wurden folgende Punkte angesteuert:
- Vorscherung von 100 s⁻¹ für einen Zeitraum von 60 Sekunden, bei der keine Messwerte aufgenommen wurden
- Scherraten-Abwärtsrampe von 200 s⁻¹ bis 0,1 s⁻¹. Es wurden 30 Messpunkte aufgenommen mit einer Messpunktdauer von je 10 Sekunden.

Die Messungen wurden bei Raumtemperatur durchgeführt. Bestimmt wurde jeweils die Viskosität, die bei einer Scherrate von 100 s⁻¹ erhalten wurde. Die Ergebnisse der Viskositätsmessungen der Plastisole mit den jeweils angegebenen Weichmachern bzw. Weichmachermischungen sind in Tabelle 3 aufgeführt.

### Gelierverhalten

Die Untersuchung des Gelierverhaltens der Plastisole wurde in einem Physica MCR 101 (Fa. Anton Paar) im Oszillationsmodus mit einem Platte-Platte Messsystem (PP25), welches schubspannungsgesteuert betrieben wurde, vorgenommen. Eine zusätzliche Temperierhaube wurde an das Gerät angeschlossen, um die bestmögliche Wärmeverteilung zu erreichen. Folgende Messparameter wurden eingestellt:
Modus: Temperatur-Gradient (Temperaturrampe linear)
Start-Temperatur: 25 °C
End-Temperatur: 180 °C
Heiz/Kühlrate: 5 K/min
Oszillations-Frequenz: 4 - 0,1 Hz Rampe (logarithmisch)
Kreisfrequenz Omega: 10 s⁻¹
Anzahl Messpunkte: 63
Messpunktdauer: 0,5 min
automatische Spaltnachführung
konstante Messpunktdauer
Spaltweite 0,5 mm

Durchführung der Messung:
Auf die untere Messsystemplatte wurden mit dem Spatel einige Tropfen des zu messenden Plastisols aufgetragen. Dabei wurde darauf geachtet, dass nach dem Zusammenfahren des Messsystems etwas Plastisol gleichmäßig aus dem Messsystem herausquellen konnte (nicht mehr als ca. 6 mm rundum). Anschließend wurde die Temperierhaube über der Probe positioniert und die Messung gestartet. Dabei wurde die sog. komplexe Viskosität des Plastisols in Abhängigkeit von der Temperatur bestimmt. Ein Einsetzen des Geliervorganges war in einem plötzlichen starken Anstieg der komplexen Viskosität zu erkennen. Je früher dieser Viskositätsanstieg einsetzte, desto besser war die Gelierfähigkeit des Systems. Aus den erhaltenen Messkurven wurden durch Interpolation für jedes Plastisol die Temperaturen bestimmt, bei der eine komplexe Viskosität von 1000 Pa*s gemessen wurde. Die Ergebnisse sind in Tabelle 3 aufgeführt.

### Bestimmung der Shore-A-Härte der Folien

Zur Bestimmung der Shore-Härten wurden die in Beispiel 2 hergestellten Plastisole in runde Gießformen aus Edelstahl mit einem Durchmesser von 42 mm gegossen (Einwaage: 20 g). Dann wurden die Pasten in den Formen im Umlufttrockenschrank 25 min bei 200 °C geliert, nach Abkühlung entnommen und vor der Messung mindestens 16 Stunden in Klimaraum (25 °C) konditioniert. Die Dicke der erhaltenen Prüfkörper betrug ca. 12 mm.

Die Härte-Messungen wurden in Anlehnung an DIN 53 505 mit einem Shore-A-Messgerät der Fa. Zwick-Roell durchgeführt, der Messwert jeweils nach 3 Sekunden abgelesen. An jedem Prüfkörper wurden Messungen an drei verschiedenen Stellen durchgeführt und der Mittelwert gebildet. Die Ergebnisse sind in Tabelle 3 aufgeführt.

**Tabelle 3: Ergebnisse der durchgeführten Experimente**

| **Eigenschaft** | **Beispielnummer** | | | | |
|---|---|---|---|---|---|
| | 1.1 | 1.2 | 1.3 | 1.4 | 1.5 |
| Visko 100s^{- 1}nach 24 h | 6.67 | 11.3 | 8.24 | 17.2 | 9.15 |
| Gelierung (T in °C bei 1000 Pa*s) | 82 | 75 | 73 | 77 | 80 |
| Shore-A-Härte | 80 | 75 | 74 | 78 | 80 |

Aus den vorliegenden Ergebnissen ist zu erkennen, dass die beanspruchten Verbindungen gemäß der oben genannten Formel (I) oder Mischungen davon bei Einsatz in einem Plastisol hinsichtlich der Viskosität größtenteils mit DINP vergleichbare Ergebnisse zeigen. In Bezug auf die Geliertemperatur und die Shore-Härte wurden sogar teils deutlich bessere Ergebnisse erzielt. Gegenüber den entsprechenden Trimellitaten mit gleicher Alkoholzusammensetzung ist die Viskosität im Plastisol signifikant niedriger und somit das Plastisol besser verarbeitbar.

### Beispiel 3 - Herstellung von Dryblends

Die für die nachfolgenden Beispiele benötigten Prüfkörper werden durch Trockenvermischen (Dryblendherstellung), Kalandrieren (Walzen) und Pressen der folgenden Rezepturen hergestellt:

**Tabelle 3: Mischungsverhältnisse der hergestellten Dryblends**

| **Substanz** | **Beispielnummer** | | | | |
|---|---|---|---|---|---|
| | 2.1 | 2.2 | 2.3 | 2.4 | 2.5 |
| Inovyn 271PC | 100 | 100 | 100 | 100 | 100 |
| Vestinol 9 | 67 | | | | |
| A | | 67 | | | |
| B | | | 67 | | |
| C | | | | 67 | |
| D | | | | | 67 |
| Drapex 39 | 3 | 3 | 3 | 3 | 3 |
| Mark BZ 965 | 2 | 2 | 2 | 2 | 2 |
| Mark CD41-0137 | 0,4 | 0,4 | 0,4 | 0,4 | 0,4 |

| | | | | | |
|---|---|---|---|---|---|
| Inovyn 271PC: PVC-Homopolymer von der Fa. Inovyn Mark BZ 965 : Themostabilisator auf Basis Ba/Zn, Fa. Galata Mark CD 041-0137: Calciumstearat der Firma Galata | | | | | |

Mit Trockenmischungen, die als Dryblends bezeichnet werden, lassen sich zum Beispiel nach thermoplastischer Verarbeitung (z.B. Kalandrieren oder Extrudieren) Kabel- und Drahtisolierungen, Schläuche oder Fußböden und Dachbahnen herstellen. Die Herstellung der Dryblends erfolgte in einem Brabender Planetenmischer.

Über die Software "Winmix" wurden folgende Parameter am Brabender Planetenmischer eingestellt.

| | |
|---|---|
| Drehzahlprogramm: | Aktiv |
| Profil: | Drehzahl 50 U/min; Haltezeit: 9 min; |
| | Anstiegszeit (der Drehzahl): 1 min; |
| | Drehzahl 100 U/min; Haltezeit: 20 min |
| Temperatur: | 88 °C |
| Messbereich: | 2 Nm |
| Dämpfung: | 3 |

Am Thermostat wurde eine Temperatur von 90 °C eingestellt und über eine Schlauchverbindung wurde der Mischbehälter am Brabender temperiert. Die Temperatur im Mischbehälter betrug nach einstündiger Temperierzeit 88 °C. Nachdem der Planetenmischer eine Eigenkalibrierung durchgeführt hatte, wurden die festen Bestandteile (PVC, Stabilisator), welche vorher in einen PE-Becher einwogen wurden, über einen Feststofftrichter und den vorhandenen Einfüllstutzen am Brabender Mischgefäß, zugeführt. Das Programm wurde gestartet und die Pulvermischung wurde 9 Minuten im Mischgefäß gerührt und temperiert, ehe die flüssigen Bestandteile über einen Flüssigkeitstrichter und dem vorhandenen Einfüllstutzen innerhalb einer Minute zügig zugeführt wurden. Die Mischung wurde weitere 20 Minuten im Planetenmischer gerührt. Nach Beendigung des Programms wurde die fertige Trockenmischung (Pulver) entnommen. Das übertragene Drehmoment-Zeit Diagramm wurde über die Brabender-Software ausgewertet. Nach der Zugabe der flüssigen Bestandteile ist ein deutlicher Kurvenanstieg zu erkennen. Erst wenn die Kurve wieder deutlich abfällt, ist die Weichmacheraufnahme abgeschlossen. Die Zeitdifferenz dieser beiden Punkte ist die Weichmacheraufnahmezeit (sog. Dryblendzeit). Diese und das maximale Drehmoment wird vom Programm automatisch ausgewertet (s. Tabelle 4).

Aus diesen Dryblends wurden Walzfelle hergestellt. Die Herstellung der Walzfelle erfolgte auf einem Kalander W150 AP der Firma Collin, der einen automatischen Probenumleger aufwies und über einen zusätzlichen Ölthermostaten temperiert wurde. Die Steuerung erfolgte über Software der Fa. Collin.

Es wurde ein fünfstufiges Programm zur Herstellung des Walzfelles verwendet:

| Stufe | Bezeichnung | Temp. | Dauer | Spaltbreite | Drehzahl |
|---|---|---|---|---|---|
| | | [°C] | [s] | [mm] | [Upm] |
| 1 | Plastifizierung des Dryblends | 165 | 60 | 0,2 | 5 |
| 2 | Vergrößerung des Spalts | 165 | 30 | 0,5 | 20 |
| 3 | Aktivierung des Probenumlegers | 165 | 170 | 0,5 | 20 |
| 4 | Walzfelloptimierung | 165 | 30 | 0,5 | 25 |
| 5 | Walzfellabnahme | 165 | 60 | 0,5 | 7 |

Nach dem Erreichen der Walzentemperatur wurde der Walzenspalt kalibriert. Zum Start der Messung wurde der Walzenspalt auf 0,2 mm eingestellt. Jeweils 160 g eines Dryblends wurden eingewogen und bei stehenden Walzen in den Walzenspalt gegeben und das Programm gestartet.

Die Pressplatten wurden mit einer Laborpresse der Firma Collin hergestellt. Die vorgefertigten Walzfelle (siehe oben) wurden zur Herstellung der Pressplatten verwendet. Die Seitenränder der Walzfelle wurden mit Hilfe einer Schneidemaschine entfernt, das Walzfell wurde anschließend in ca. 14,5 x 14,5 cm große Stücke geschnitten. Für 1 mm dicke Pressplatten wurden je 2 Walzfellstücke übereinander in den 15 x 15 cm großen Pressrahmen aus Edelstahl gelegt.

Es wurde das folgende dreistufige Programm zur Herstellung der Pressplatten verwendet:

| Stufe | Bezeichnung | Temp. [°C] | Druck [bar] | Dauer [s] |
|---|---|---|---|---|
| 1 | Vorpressen | 170 | 5 | 60 |
| 2 | Pressen | 170 | 200 | 200 |
| 3 | Abkühlen | 40 | 200 | 200 |

Die so hergestellten Pressplatten wurden verschiedenen Prüfungen unterzogen. Die Ergebnisse sind in Tabelle 4 dargestellt.

Die Shore-A-Härte wurde wie in Beispiel 2 beschrieben ermittelt, allerdings wurden hier als Probekörper 6 mm dicke Pressplatten hergestellt. Hierzu wurden je 12 Walzfellstücke in einen 5 x 5 cm großen Pressrahmen aus Edelstahl gelegt.

### Glasübergangstemperatur (Tg) der Pressplatten

Die Glasüberganstemperatur wurde mit Hilfe von DMTA-Messungen gemäß DIN 65583 mit einem Rheometer der Firma Anton Paar vom Typ MCR 302 bestimmt. Unter konstanten dynamischmechanischen Bedingungen (1 Hz, Deformation 0,3 %) wurden die viskoelastischen Eigenschaften der Folien (1 mm Dicke) in Abhängigkeit der Temperatur (Temperaturrampe von -100 bis +50 °C) erfasst und der Speichermodul, das Verlustmodul und der Verlustfaktor bestimmt. Das Maximum des Verlustmoduls wird dabei als Glasübergangstemperatur ausgewertet. Die nachfolgende Tabelle zeigt jeweils den Mittelwert aus einer Doppelbestimmung.

**Tabelle 4: Ergebnisse der durchgeführten Experimente**

| **Eigenschaft** | **Beispielnummer** | | | | |
|---|---|---|---|---|---|
| | 2.1 | 2.2 | 2.3 | 2.4 | 2.5 |
| WM-Aufnahmezeit in s | 5.4 | 4.3 | 3.7 | 4.9 | 5.2 |
| Tg in °C | -36 | -26 | -33 | -20 | -18 |
| Shore-A-Härte | 71 | 66 | 65 | 67 | 69 |

Bei den hergestellten Dryblends und den daraus hergestellten Prüfkörpern zeigt sich, dass mit den erfindungsgemäßen Verbindungen gemäß der oben genannten Formel (I) oder Mischungen davon in allen Untersuchungen bessere Ergebnisse erreicht werden konnten. Insbesondere die Weichmacheraufnahmezeit und Shore-Härte A wurden gegenüber DINP deutlich verbessert, gegenüber den entsprechenden Trimellitaten mit gleicher Alkoholzusammensetzung ist die Glasübergangstemperatur klar niedriger.

## Patentansprüche

1. Weichmacherzusammensetzung, umfassend mindestens eine Verbindung gemäß der folgenden Formel (I) 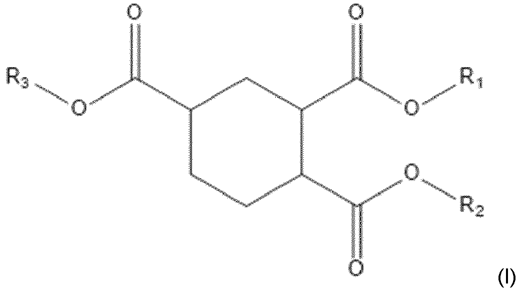 wobei die Reste R₁, R₂ und R₃ jeweils unabhängig voneinander aus der Gruppe, bestehend aus n-Pentyl, 2-Methylbutyl und 3-Methylbutyl, ausgewählt werden.

2. Weichmacherzusammensetzung nach Anspruch 1, wobei die Reste R₁, R₂ und R₃ identisch sind.

3. Weichmacherzusammensetzung nach Anspruch 1, umfassend eine Mischung von Verbindungen gemäß der Formel (I) 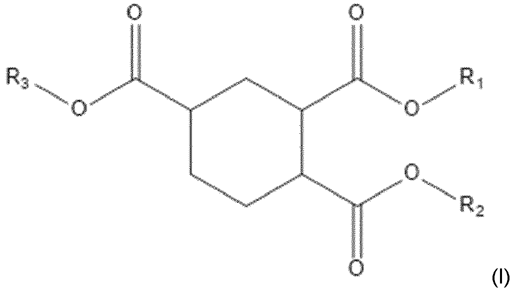 wobei ein Rest aus der Gruppe, bestehend aus n-Pentyl, 2-Methylbutyl und 3-Methylbutyl in einem Anteil von 30 bis 95 Mol% und ein anderer Rest oder die beiden anderen Reste aus der genannten Gruppe in einem Anteil von 5 bis 70 Mol% jeweils bezogen auf alle Reste R₁, R₂ und R₃ der Verbindung gemäß der Formel (I) in der Mischung vorhanden sind.

4. Weichmacherzusammensetzung nach Anspruch 3, wobei ein Rest aus der Gruppe, bestehend aus n-Pentyl, 2-Methylbutyl und 3-Methylbutyl in einem Anteil von 40 bis 95 Mol% und ein anderer Rest oder die beiden anderen Reste aus der genannten Gruppe in einem Anteil von 5 bis 60 Mol% jeweils bezogen auf alle Reste R₁, R₂ und R₃ der Verbindung gemäß der Formel (I) in der Mischung vorhanden sind.

5. Weichmacherzusammensetzung nach Anspruch 3 oder 4, wobei der 2-Methylbutylrest in einem Anteil von maximal 60 Mol%, vorzugsweise in einem Anteil von maximal 40 Mol% jeweils bezogen auf alle Reste R₁, R₂ und R₃ der Verbindung gemäß der Formel (I) in der Mischung vorhanden ist.

6. Weichmacherzusammensetzung nach einem der Ansprüche 1 bis 5, wobei die Weichmacherzusammensetzung einen weiteren Weichmacher enthält, der aus der Gruppe, bestehend aus Alkylbenzoaten, Dialkyladipaten, Glycerinestern, Citronensäuretrialkylestern, acylierten Citronensäuretrialkylestenr, Glykoldibenzoaten, Trialkylestern der Trimellitsäure, Dialkylterephthalaten, Dialkylphthalaten, Estern der Furandicarbonsäure, Dialkanoylestern von Dianhydrohexitolen (z.B. Isosorbid), epoxidierten Fettsäurealkylestern, Polymerweichmachern, beispielsweise der Polyadipate, und Dialkylestern der 1,2-, 1,3- oder 1,4-Cyclohexandicarbonsäure, ausgewählt wird.

7. Weichmacherzusammensetzung nach Anspruch 6, wobei der weitere Weichmacher aus der Gruppe, bestehend aus C8- bis C13-Alkylbenzoaten, C4- bis C10-Dialkyladipaten, Citronensäuretrialkylestern mit C4 bis C9-Alkylgruppen, C4- bis C10-Trialkyltrimellitate, C4-bis C9-Dialkylterephthalaten, C4- bis C13-Dialkylphthalaten, insbesondere C9- bis C13-Dialkylphthalaten und C4- bis C10-Dialkylestern der 1,2-, 1,3- oder 1,4-Cyclohexandicarbonsäure, ausgewählt wird.

8. Weichmacherzusammensetzung nach einem der vorhergehenden Ansprüche, die neben der mindestens einen Verbindung gemäß der vorgenannten Formel (I) oder der Mischung von Verbindungen gemäß der vorgenannten Formel (I) und 1,2- oder 1,4-Cyclohexandicarbonsäureester, insbesondere die entsprechenden Diisononyl- oder Di-2-ethylhexylester, umfasst.

9. Weichmacherzusammensetzung nach Anspruch 1 bis 7, die neben der mindestens einen Verbindung gemäß der vorgenannten Formel (I) oder der Mischung von Verbindungen gemäß der vorgenannten Formel (I) Di-ethylhexylterephthalat (DOTP) umfasst.

10. Weichmacherzusammensetzung nach Anspruch 1 bis 7, die neben der mindestens einen Verbindung gemäß der vorgenannten Formel (I) oder der Mischung von Verbindungen gemäß der vorgenannten Formel (I) einen schnell gelierenden Weichmacher ausgewählt aus der Gruppe, bestehend aus Dibutylterephthalat, Di(iso)-pentylterephthalat, Isodecylbenzoat, Isononylbenzoat, Acetyl-tributylcitrat, Tributylcitrat, Dipropylenglycoldibenzoat, Diethylenglycoldibenzoat, Triethylenglycoldibenzoat und Mischungen von zwei oder mehr davon, umfasst.

11. Verwendung der Weichmacherzusammensetzung nach einem der vorherigen Ansprüche als Weichmacher für Polymere.

12. Verwendung nach Anspruch 11 für PVC oder Vinylchlorid-enthaltende Polymere.

13. Kunststoffzusammensetzung, enthaltend ein oder mehrere Polymere, ausgewählt aus der Gruppe, bestehend aus Polyvinylchlorid, Co-Polymeren von Vinylchlorid mit Vinylacetat oder mit Butylacrylat, Polyalkylmethacrylat (PAMA), Polyvinylbutyral (PVB), Polyurethan, Polysulfiden, Polymilchsäure (PLA), Polyhydroxybutyral (PHB) und Nitrocellulose, und die Weichmacherzusammensetzung nach einem der Ansprüche 1 bis 7.

14. Kunststoffzusammensetzung nach Anspruch 13, wobei die Kunststoffzusammensetzung zumindest PVC als Polymer enthält.
